# EUROPÄISCHE PATENTSCHRIFT

(11) **EP 3 203 331 B1**
(45) Veröffentlichungstag und Bekanntmachung des Hinweises auf die Patenterteilung: **18.04.2018**
(21) Anmeldenummer: 16153935.8
(22) Anmeldetag: 02.02.2016
(51) Int. Cl.: G05B 19/00, H04Q 9/00

(54) **PROAKTIVE MESSWERTÜBERTRAGUNG AN MOBILE ENDGERÄTE**
PROACTIVE TRANSMISSION OF VALUES TO MOBILE TERMINALS
TRANSMISSION PROACTIVE DE VALEURS DE MESURE À DES TERMINAUX MOBILES

(43) Veröffentlichungstag der Anmeldung: 09.08.2017
(73) Patentinhaber: VEGA Grieshaber KG, 77709 Wolfach (DE)
(72) Erfinder: HUMMEL, Jakob, 79215 Elzach (DE); DIETERLE, Marcel, 77709 Oberwolfach (DE)
(74) Vertreter: Maiwald Patentanwalts GmbH

(56) Entgegenhaltungen:
- DE-A1-102012 108 990
- US-A1- 2005 164 684
- US-A1- 2009 065 578

## Beschreibung

### Gebiet der Erfindung

Die Erfindung betrifft die Übertragung und Anzeige von Feldgerätemessdaten. Insbesondere betrifft die Erfindung ein mobiles Anzeigegerät zur Auswahl eines Feldgeräts aus einer Gruppe von Feldgeräten und zur Abfrage von Messdaten des Feldgeräts, eine Messanordnung mit einer Gruppe von Feldgeräten und einem mobilen Anzeigegerät, ein Verfahren zur Auswahl eines Feldgeräts aus einer Gruppe von Feldgeräten und zur Abfrage von Messdaten des Feldgeräts, ein Programmelement und ein computerlesbares Medium.

### Technischer Hintergrund

Die Abfrage der Messdaten von Feldgeräten erfolgt beispielsweise über einen Webserver, in welchen sich der Nutzer einwählt. Dieser Webserver ist kommunikativ mit den Feldgeräten verbunden und erhält von diesen die Messdaten. Alternativ kann sich ein Benutzer die Messdaten auch direkt vom Feldgerät verschaffen, indem er beispielsweise ein Anzeige- und Bedienmodul oder Kommunikationsmodul an das Feldgerät anschließt.

US 2005/0164684 A1 beschreibt eine mobile Kommunikationsvorrichtung zur Kommunikation mit mehreren Feldgeräten. Zur Identifikation eines Feldgeräts wird mit einer Videokamera ein Bild des Feldgeräts erfasst und eine alphanumerische Symbolabfolge auf dem Feldgerät identifiziert.

US 2009/0065578 A1 beschreibt ein Prozesssteuersystem, dessen Bedienpersonal tragbare Geräte verwenden kann. Diese Geräte können den Standort des Benutzers erfassen.

### Zusammenfassung der Erfindung

Es ist eine Aufgabe der Erfindung, die Messdatenabfrage von Feldgeräten zu erleichtern.

Diese Aufgabe wird durch die Merkmale der unabhängigen Patentansprüche gelöst. Weiterbildungen der Erfindung ergeben sich aus den Unteransprüchen und der folgenden Beschreibung.

Ein erster Aspekt der Erfindung betrifft ein mobiles Anzeigegerät zur Auswahl eines Feldgerätes aus einer Gruppe von Feldgeräten und zur Abfrage von Messdaten des Feldgeräts. Das Anzeigegerät weist eine Sensoranordnung, eine Recheneinheit und eine Kommunikationseinheit auf.

Die Sensoranordnung dient dem Erfassen von Umfelddaten, welche mit dem Ort des Feldgeräts oder des Behälters zusammenhängen, an dem das Feldgerät angebracht bzw. dem das Feldgerät zugeordnet ist. Handelt es sich bei dem Feldgerät um ein Füllstandmessgerät, so dient dieser Behälter der Lagerung des Füllguts, dessen Füllstand zu messen ist.

Die Recheneinheit dient der Analyse der Umfelddaten und der Identifikation und/oder Auswahl des Feldgeräts basierend auf der Analyse der Umfelddaten. In anderen Worten kann die Recheneinheit aus den Umfelddaten, die die Sensoranordnung erfasst hat, bestimmen, welches Feldgerät der Gruppe von Feldgeräten auszuwählen ist. Dies kann dadurch ermöglicht werden, dass das Anzeigegerät auf einen Datensatz zugreifen kann, welcher Informationen darüber enthält, an welchem Behälter welches Feldgerät angebracht ist.

Beispielsweise kann vorgesehen sein, dass dasjenige Feldgerät bzw. derjenige Behälter ausgewählt wird, welcher sich am nähesten an dem mobilen Anzeigegerät befindet und/oder dasjenige Feldgerät / derjenige Behälter, auf welchen das mobile Anzeigegerät gerichtet ist.

Die Kommunikationseinheit dient der Abfrage von Messdaten des Feldgeräts, welches identifiziert und ausgewählt wurde. Die Messdatenabfrage kann automatisch erfolgen, ohne dass der Benutzer dabei eingreifen muss oder ein Feldgerät auszuwählen hat. Allein durch die Umfelddaten wird bestimmt, welches Feldgerät vom Anzeigegerät auszuwählen ist und daraufhin werden dessen Messdaten automatisch abgefragt. Es kann aber auch vorgesehen sein, dass diese Messdaten bereits zu einem früheren Zeitpunkt abgefragt werden, so dass sie nach Auswahl des Feldgeräts bereits im Anzeigegerät bereitstehen.

So kann sich der Benutzer beispielsweise durch eine Lagerhalle bewegen, in der eine Vielzahl an Tanks gelagert ist, wobei jeder dieser Tanks ein eigenes Füllstandmessgerät aufweist. Dem Benutzer wird bei seinem Gang durch die Halle jeweils beispielsweise nur das nächstliegende Feldgerät und/oder der nächstliegende Tank angezeigt und der dort aktuell gemessene Füllstand.

An dieser Stelle sei daraufhingewiesen, dass es sich bei dem Feldgerät um ein Füllstandmessgerät handeln kann oder aber auch um ein Druckmessgerät oder Durchflussmessgerät, oder ein anderweitiges Feldgerät. Besondere Vorzüge bietet die Erfindung für die Fälle, in denen eine Vielzahl an Feldgeräten an unterschiedlichen Orten angeordnet ist, da sie es dem Benutzer ermöglicht, die ihn interessierenden Messdaten automatisch angezeigt zu bekommen, ohne dass er selbst ein Feldgerät auswählen muss oder die Messdatenabfrage zu triggern hat.

Gemäß einer Ausführungsform der Erfindung ist das mobile Anzeigegerät zur automatischen Abfrage der Messdaten direkt beim Feldgerät ausgeführt.

Gemäß einer weiteren Ausführungsform der Erfindung ist das mobile Anzeigegerät zur automatischen Abfrage der Messdaten bei einem Server ausgeführt.

Die Kommunikation zwischen dem mobilen Anzeigegerät und dem Feldgerät respektive dem Server erfolgt im Regelfall drahtlos.

Gemäß einer weiteren Ausführungsform der Erfindung umfassen die Umfelddaten vom Feldgerät gesendete Positionsdaten, Ausrichtungsdaten des mobilen Anzeigegeräts, Bilddaten des Behälters und/oder Barcodedaten oder QR-Codedaten eines an dem Behälter angebrachten Tags.

Durch Auswertung dieser Umfelddaten ist es somit möglich, den Behälter zu identifizieren (beispielsweise durch Bildanalyse des aufgezeichneten Behälterbildes oder Lesen des Barcodes, etc.). Auch ist es möglich, dass anhand der vom Feldgerät gesendeten Positionsdaten auf die Identität des Feldgeräts rückgeschlossen wird, da das mobile Anzeigegerät die Positionen und Identitäten der Feldgeräte in einer Karte gespeichert hat. Aus den gesendeten Positionsdaten kann darüber hinaus der Abstand des Feldgeräts vom mobilen Anzeigegerät bestimmt werden, zumindest dann, wenn das mobile Anzeigegerät einen eigenen Positionssensor (beispielsweise GPS-Sensor) aufweist.

Auch können die Umfelddaten Höheninformationen enthalten, aus welchen festgestellt werden kann, in welcher Höhe sich der Benutzer befindet. Aus dieser Höhenangabe kann beispielsweise rückgeschlossen werden, auf welchem Tank er gerade steht und somit eine Zuordnung des nächstgelegenen Feldgeräts erfolgen. Ebenso können die Umfeldinformationen eine Information über den Luftdruck enthalten, aus welchem beispielsweise die Höhe ableitbar ist. Auch können sie Informationen über von dem/den Feldgeräten empfangenen Daten, Sendesignalfrequenzen oder Sendeleistungen enthalten, aus welchen auf das sendende Feldgerät und/oder dessen Abstand vom Anzeigegerät geschlossen werden kann. Verwendet das Feldgerät beispielsweise kurzreichweitige Kommunikation, wie Bluetooth, werden nur von denjenigen Feldgeräten Funksignale empfangen, die sich in unmittelbarer Nähe (typischerweise unter 30m) zum Anzeigegerät befinden.

Gemäß einer weiteren Ausführungsform der Erfindung handelt es sich bei dem mobilen Anzeigegerät um eine Datenbrille, einen Datenhelm, ein Smartphone, ein Tablet oder eine andere Art von mobilem Computer. Es kann vorgesehen sein, dass die den Nutzer interessierenden Daten vom Feldgerät immer für dasjenige Feldgerät auf seinem Display abgebildet werden, dem er sich gerade zuwendet. Neben Füllstandsdaten kann auch vorgesehen sein, dass die Position des Feldgeräts und/oder des Tanks auf dem Display dargestellt wird, damit der Benutzer weiß, um welchen Tank es sich handelt. Auch kann vorgesehen sein, dass der Pegelstand des Tanks auf dem Display abgebildet wird, beispielsweise in Form einer farbigen Linie oder eines Rechtecks, welches die Flüssigkeit im Behälter simuliert. Auf diese Weise kann der Benutzer durch Schwenken des Kopfes sehr schnell einen Eindruck von der Füllstandsituation in sämtlichen Behältern gewinnen, da diese Informationen grafisch auf die tatsächlichen Behälter überlagert werden können.

Gemäß einem weiteren Aspekt der Erfindung ist eine Messanordnung zur Erfassung und Ausgabe von Messdaten angegeben, welche eine Gruppe von Feldgeräten, die an unterschiedlichen Orten angeordnet sind, und ein oben und im Folgenden beschriebenes mobiles Anzeigegerät aufweist. Die Feldgeräte sind zur Übermittlung von Umfelddaten, insbesondere von Positionsdaten, an das mobile Anzeigegerät ausgeführt und das mobile Anzeigegerät ist zur Auswahl eines der Feldgeräte unter Hinzuziehung der Umfelddaten ausgeführt.

Der Benutzer selbst muss also keine Auswahl treffen. Vielmehr werden ihm die Messdaten des ausgewählten Feldgeräts automatisch auf das Anzeigegerät übertragen.

Ein weiterer Aspekt der Erfindung betrifft ein Verfahren zur Auswahl eines Feldgeräts aus einer Gruppe von Feldgeräten und zur Abfrage von Messdaten des Feldgeräts, bei dem zunächst Umfelddaten, welche mit dem Ort eines Behälters zusammenhängen, an dem das Feldgerät angebracht ist, erfasst werden. Danach erfolgt eine Analyse der Umfelddaten, gefolgt von einer Identifikation und Auswahl des Feldgeräts basierend auf der Analyse. Gleichzeitig, davor oder nachdem das Feldgerät identifiziert und ausgewählt wurde, erfolgt eine automatische Abfrage der Feldgerätemessdaten. Dies alles kann computergestützt erfolgen, ohne dass ein Eingriff durch den Nutzer erforderlich ist. Nach der Auswahl des Feldgeräts werden dessen Messdaten auf einem Display angezeigt. Es kann vorgesehen sein, dass keine anderen Messdaten angezeigt werden, sondern ausschließlich nur die des ausgewählten Feldgeräts.

Ein weiterer Aspekt der Erfindung betrifft ein Programmelement, das, wenn es auf einem Prozessor eines mobilen Anzeigegeräts ausgeführt wird, das Anzeigegerät anweist, die oben und im Folgenden beschriebenen Schritte durchzuführen.

Ein weiterer Aspekt der Erfindung betrifft ein computerlesbares Medium, auf dem das oben beschriebene Programmelement gespeichert ist.

Dabei kann das Programmelement zum Beispiel Teil einer Software sein, die auf dem Prozessor des mobilen Anzeigegeräts gespeichert ist. Auch kann es sich bei dem Programmelement um ein Programmelement handeln, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

Kurze Beschreibung der Figuren
- Fig. 1: zeigt eine Messanordnung gemäß einem Ausführungsbeispiel der Erfindung.
- Fig. 2: zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

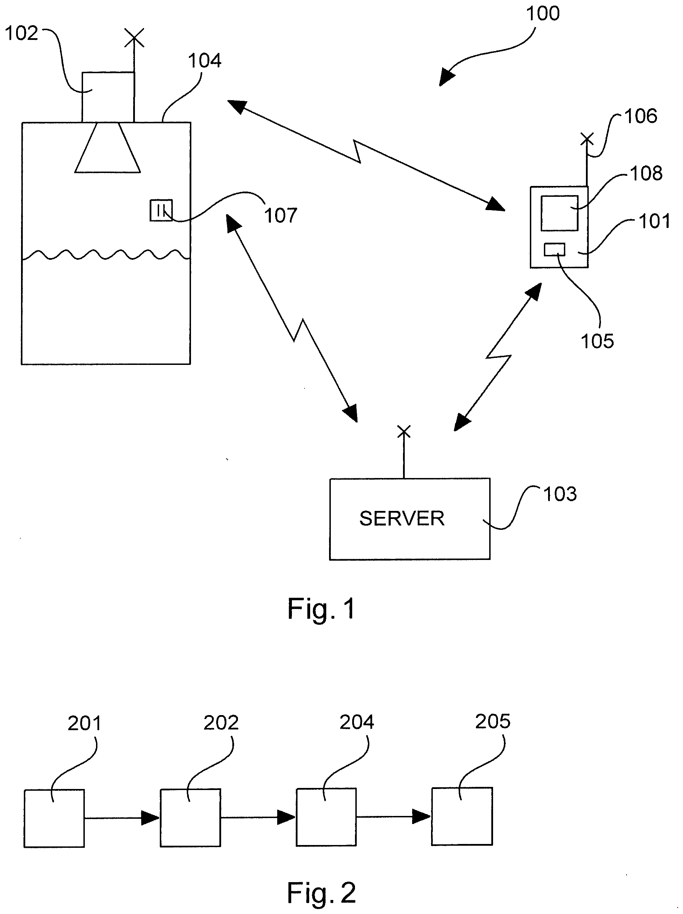

Fig. 1 zeigt eine Messanordnung 100 gemäß einem Ausführungsbeispiel der Erfindung. Die Messanordnung weist mehrere Füllgutbehälter oder Tanks 104 auf, von denen der Übersichtlichkeit halber nur einer gezeigt ist. In jedem Tank ist ein Füllstandmessgerät 102 eingebaut, welches den Füllstand des in dem Behälter gespeicherten Füllguts bestimmen kann. Tank und Füllstandmessgerät stellen jedoch nur ein Ausführungsbeispiel dar. Bei dem Feldgerät kann es sich neben einem Füllstandmessgerät auch um einen anderen Sensor handeln, beispielsweise einen Drucksensor oder einen Durchflusssensor.

An dem Tank ist ein Tag 107 angebracht, auf welchem ein Barcode oder QR-Code abgebildet ist.

Das System 100 weist weiterhin einen Webserver 103 auf sowie ein mobiles Anzeigegerät 101. Webserver, Anzeigegerät und Feldgerät können drahtlos miteinander kommunizieren. So kann das Feldgerät 102 dem Server bzw. Webserver 103 Messdaten übertragen, welche vom Anzeigegerät 101 dann vom Server abgerufen werden. Auch kann vorgesehen sein, dass das Feldgerät dem Anzeigegerät Messdaten direkt überträgt.

Hierfür weist das Anzeigegerät eine Antenne 106 auf, welche auch als Sensor dienen kann, um Umfelddaten zu erfassen. Die Recheneinheit 105 des Anzeigegeräts wertet die erfassten Umfelddaten aus und triggert dann gegebenenfalls eine Messdatenabfrage an den Server und/oder das Feldgerät. Die Messdaten können aber auch schon vorher bereitgestellt worden sein. Die empfangenen Messdaten können dann im Display 108 zur Anzeige gebracht werden. Insbesondere diese Anzeige wird durch die Auswertung der Umfelddaten getriggert.

Die Auswahl des Feldgeräts 102, dessen Daten abgefragt und angezeigt werden sollen, erfolgt also anhand einer Analyse der vom Anzeigegerät erfassten Umgebungsdaten.

Bei dem Anzeigegerät 106 handelt es sich beispielsweise um ein Smartphone, ein Tablet, eine Uhr, eine Datenbrille, eine sog. Hololens, ein Armband, einen Datenhelm oder ein sog. Wearable.

Das Anzeigegerät ist in der Lage, das relevante Feldgerät proaktiv auszuwählen, wodurch eine automatische Übertragung der relevanten Messdaten getriggert wird. Diese Auswahl erfolgt anhand der erfassten Umgebungsdaten bzw. Umfelddaten.

Die Messwerte des Feldgeräts 102 werden beispielsweise kontinuierlich zu dem Webserver 103 übertragen. Betritt der Benutzer das Tanklager, in dem sich der Behälter 104 befindet, werden anhand der vom Anzeigegerät erfassten Umfelddaten die für den Benutzer relevanten Tanks ermittelt und die Messdaten daraufhin (oder sogar schon vor Betreten des Tanklagers) auf sein Anzeigegerät geladen. Nähert sich der Benutzer einem bestimmten Tank/mehreren Tanks, werden beispielsweise die Füllstandsdaten auf seinem Anzeigegerät angezeigt, welchem Tank/welchen Tanks er sich annähert, kann durch die Umfelddaten ermittelt werden. Die Füllstandsdaten werden ihm ohne manuelle Auswahl zur Anzeige gebracht, sodass ein maximaler Benutzerkomfort gewährleistet ist.

Das Anzeigegerät kann in der Lage sein, eine Vielzahl unterschiedlicher Umfelddaten zu erfassen, wie beispielsweise Positionsdaten von den Feldgeräten und/oder dem Anzeigegerät selbst, die Höhe, auf der sich das Anzeigegerät befindet, der dreidimensionale Neigungswinkel des Anzeigegeräts, welcher die Richtung, in welche das Anzeigegerät weist, abbildet, den Luftdruck, Funkempfang bestimmter Daten oder Frequenzen des Feldgeräts und/oder visuelle Identifikationsmerkmale wie Barcode/QR-Code oder Tankansicht.

Beispielsweise kann das Anzeigegerät programmiert sein, immer dasjenige Feldgerät bzw. dessen jüngste, aktuelle Messdaten anzuzeigen, welches sich am nahesten am mobilen Anzeigegerät befindet. Eine weitere Möglichkeit, dasjenige Feldgerät zu identifizieren, an welchem der Benutzer zu einem bestimmten Zeitpunkt interessiert sein könnte, besteht darin, die Höhe, in der sich der Benutzer befindet, zu messen. Haben alle Behälter im Raum eine unterschiedliche Höhe, kann über die gemessene Höheninformation der entsprechende Behälter und damit auch das Feldgerät identifiziert werden. Daraufhin werden die von dem Feldgerät aktuell gemessenen Messdaten auf dem Anzeigegerät zur Anzeige gebracht.

Fig. 2 zeigt ein Flussdiagramm eines Verfahrens gemäß einem Ausführungsbeispiel der Erfindung. In Schritt 201 erfolgt ein Erfassen von Umfelddaten, welche mit dem Ort eines Behälters zusammenhängen, an dem das Feldgeräts angebracht ist. In Schritt 202 werden die erfassten Umfelddaten analysiert. Als Zwischenergebnis dieser Analyse wird festgestellt, dass sich drei Behälter im Blickwinkel des Benutzers (bzw. der von ihm getragenen Datenbrille) befinden. In Schritt 204 wird aus diesen drei Behältern derjenige Behälter ausgewählt, der sich am nahesten am Benutzer (bzw. dessen mobilen Anzeigegerät) befindet und in Schritt 205 werden die von diesem Messgerät zuletzt erfassten Messdaten auf dem Anzeigegerät dargestellt.

Zu einem beliebigen Zeitpunkt des Verfahrens können die Messdaten sämtlicher oder zumindest des ausgewählten Feldgeräts abgefragt und auf dem Anzeigegerät geladen werden (entweder direkt vom Feldgerät oder über den Server), damit sie möglichst zeitnah zur Anzeige gebracht werden können. Dies ist insbesondere dann vorteilhaft, wenn der Benutzer seine Blickrichtung bzw. die Ausrichtung seines tragbaren Geräts schnell ändert oder sich zügig durch den Raum bewegt, sodass relativ schnell hintereinander verschiedene Tanks ausgewählt und somit verschiedene Füllstände angezeigt werden müssen.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Mobiles Anzeigegerät (101) zur Auswahl eines Feldgeräts (102) und zur Abfrage von Messdaten des Feldgeräts, das Anzeigegerät aufweisend:
eine Sensoranordnung (106) zum Erfassen von Umfelddaten, welche mit dem Ort eines Behälters (104) zusammenhängen, an dem das Feldgerät angebracht ist, wobei die Umfelddaten Ausrichtungsdaten des mobilen Anzeigegeräts (101), Bilddaten des Behälters und/oder Höheninformationen sind;
eine Recheneinheit (105) zur Analyse der Umfelddaten und zur Identifikation des Behälters basierend auf der Analyse, sowie zur darauffolgenden Identifikation und Auswahl des Feldgeräts;
eine Kommunikationseinheit (106) zur Abfrage von Messdaten des ausgewählten Feldgeräts;
wobei das Anzeigegerät zur Darstellung der Messdaten des ausgewählten Feldgeräts ausgeführt ist.

2. Mobiles Anzeigegerät nach Anspruch 1,
wobei das mobile Anzeigegerät (101) zur automatischen Abfrage der Messdaten direkt beim ausgewählten Feldgerät ausgeführt ist.

3. Mobiles Anzeigegerät nach Anspruch 1 oder 2,
wobei das mobile Anzeigegerät (101) zur automatischen Abfrage der Messdaten bei einem Server ausgeführt ist.

4. Mobiles Anzeigegerät nach einem der vorhergehenden Ansprüche,
wobei es sich bei dem ausgewählten Feldgerät (102) um ein Füllstandmessgerät, ein Dichte- oder ein Druckmessgerät handelt.

5. Mobiles Anzeigegerät nach einem der vorhergehenden Ansprüche,
wobei die Umfelddaten vom ausgewählten Feldgerät (102) gesendete Positionsdaten umfassen.

6. Mobiles Anzeigegerät nach einem der vorhergehenden Ansprüche,
wobei die Umfelddaten Barcodedaten oder QR-Codedaten eines an dem Behälter (104) angebrachten Tags (107) umfassen.

7. Mobiles Anzeigegerät nach einem der vorhergehenden Ansprüche,
wobei es sich bei dem mobilen Anzeigegerät (101) um eine Datenbrille oder einen Datenhelm handelt.

8. Messanordnung (100) zur Erfassung und Ausgabe von Messdaten, aufweisend:
ein oder mehrere Feldgeräte;
ein mobiles Anzeigegerät (101) nach einem der Ansprüche 1 bis 7;
wobei die Feldgeräte zur Übermittlung von Umfelddaten, insbesondere von Positionsdaten, an das mobile Anzeigegerät ausgeführt sind;
wobei das mobile Anzeigegerät zur Auswahl eines der Feldgeräte unter Hinzuziehung der Umfelddaten ausgeführt ist.

9. Verfahren zur Auswahl eines Feldgeräts (102) und zur Abfrage von Messdaten des Feldgeräts, aufweisend die Schritte:
Erfassen (201) von Umfelddaten, welche mit dem Ort eines Behälters zusammenhängen, an dem das Feldgerät angebracht ist, wobei die Umfelddaten Ausrichtungsdaten des mobilen Anzeigegeräts (101), Bilddaten des Behälters und/oder Höheninformationen sind;
Analyse (202) der Umfelddaten;
Identifikation (204) des Behälters basierend auf der Analyse;
Identifikation und Auswahl des Feldgeräts;
Abfrage von Messdaten des ausgewählten Feldgeräts;
Darstellen (205) der Messdaten des ausgewählten Feldgeräts.

10. Programmelement, das, wenn es auf dem Prozessor (105) eines mobilen Anzeigegeräts (101) ausgeführt wird, das Anzeigegerät anweist, die Schritte nach Anspruch 9 durchzuführen.

11. Computerlesbares Medium, auf dem ein Programmelement nach Anspruch 10 gespeichert ist.

## Claims

1. Mobile display device (101) for selecting a field device (102) and for retrieving measurement data from the field device, the display device comprising:
a sensor arrangement (106) for capturing environmental data which are associated with the location of a container (104) to which the field device is mounted, wherein the environmental data are orientation data of the mobile display device (101), image data of the container and/or height information;
a processing unit (105) for analysing the environmental data, for identifying the container on the basis of the analysis, and for subsequently identifying and selecting the field device;
a communication unit (106) for retrieving measurement data from the selected field device;
wherein the display device is designed to display the measurement data from the selected field device.

2. Mobile display device according to claim 1,
wherein the mobile display device (101) is designed to automatically retrieve measurement data directly at the selected field device.

3. Mobile display device according to claim 1,
wherein the mobile display device (101) is designed to automatically retrieve the measurement data on a server.

4. Mobile display device according to claim 1,
wherein the selected field device (102) is a fill level measurement device, a density measuring device or a pressure gauge.

5. Mobile display device according to claim 1,
wherein the environmental data include position data sent by the selected field device (102).

6. Mobile display device according to claim 1,
wherein the environmental data include barcode data or QR code data of a label (107) affixed to the container (104).

7. Mobile display device according to claim 1,
wherein the mobile display device (101) is a pair of smart glasses or a data helmet.

8. Measurement arrangement (100) for capturing and outputting measurement data, comprising:
one or more field devices;
a mobile display device (101) according to one of claims 1 to 7;
wherein the field devices are designed to transmit environmental data, in particular position data, to the mobile display device;
wherein the mobile display device is designed to select any of the field devices by using the environmental data.

9. Method for selecting a field device (102) and for retrieving measurement data from the field device, comprising the steps of:
Capturing (201) environmental data which are associated with the location of the container to which the field device is mounted, wherein the environmental data are orientation data of the mobile display device (101), image data of the container and/or height information;
Analyzing (202) the environmental data;
Identifying (204) the container on the basis of the analysis;
identifying and selecting the field device;
retrieving measurement data from the selected field device;
displaying (205) the measurement data from the selected field device.

10. Program element which, when executed on the processor (105) of a mobile display device (101), instructs the display device to carry out the steps according to claim 9.

11. Computer-readable medium on which a program element according to claim 10 is stored.

## Revendications

1. Appareil d'affichage mobile (101) destiné à sélectionner un appareil de terrain (102) et à consulter des données de mesure de l'appareil de terrain, l'appareil d'affichage comportant :
un agencement de capteur (106) pour acquérir des données d'environnement associées à l'emplacement d'un réservoir (104) sur lequel l'appareil de terrain est monté, les données d'environnement étant des données d'orientation de l'appareil d'affichage mobile (101), des données d'images du réservoir et/ou des informations de hauteur,
une unité de calcul (105) pour analyser les données d'environnement et pour identifier le réservoir sur la base de l'analyse, ainsi que pour identifier et sélectionner ensuite l'appareil de terrain,
une unité de communication (106) pour consulter des données de mesure de l'appareil de terrain sélectionné,
dans lequel l'appareil d'affichage est adapté pour afficher les données de mesure de l'appareil de terrain sélectionné.

2. Appareil d'affichage mobile selon la revendication 1,
dans lequel l'appareil d'affichage mobile (101) est adapté pour consulter automatiquement les données de mesure directement sur l'appareil de terrain sélectionné.

3. Appareil d'affichage mobile selon la revendication 1 ou 2,
dans lequel l'appareil d'affichage mobile (101) est adapté pour consulter automatiquement les données de mesure sur un serveur.

4. Appareil d'affichage mobile selon l'une des revendications précédentes,
dans lequel l'appareil de terrain sélectionné (102) est un appareil de mesure de niveau, de densité ou de pression.

5. Appareil d'affichage mobile selon l'une des revendications précédentes,
dans lequel les données d'environnement comprennent des données de position envoyées par l'appareil de terrain sélectionné (102).

6. Appareil d'affichage mobile selon l'une des revendications précédentes,
dans lequel les données d'environnement comprennent des données de code à barres ou des données de code QR d'une étiquette (107) apposée sur le réservoir (104).

7. Appareil d'affichage mobile selon l'une des revendications précédentes,
dans lequel l'appareil d'affichage mobile (101) est une paire de lunettes intelligentes ou un visiocasque.

8. Agencement de mesure (100) destiné à acquérir et délivrer des données de mesure, comportant :
un ou plusieurs appareils de terrain,
un appareil d'affichage mobile (101) selon l'une des revendications 1 à 7,
dans lequel les appareils de terrain sont adaptés pour transmettre des données d'environnement, en particulier des données de position, à l'appareil d'affichage mobile,
dans lequel l'appareil d'affichage mobile est adapté pour sélectionner l'un des appareils de terrain en utilisant les données d'environnement.

9. Procédé pour sélectionner un appareil de terrain (102) et consulter des données de mesure de l'appareil de terrain, comportant les étapes consistant à :
acquérir (201) des données d'environnement associées à l'emplacement d'un réservoir sur lequel l'appareil de terrain est monté, les données d'environnement étant des données d'orientation de l'appareil d'affichage mobile (101), des données d'images du réservoir et/ou des informations de hauteur, analyser (202) les données d'environnement,
identifier (204) le réservoir sur la base de l'analyse,
identifier et sélectionner l'appareil de terrain,
consulter les données de mesure de l'appareil de terrain sélectionné,
afficher (205) les données de mesure de l'appareil de terrain sélectionné.

10. Elément de programme qui, lorsqu'il est exécuté sur le processeur (105) d'un appareil d'affichage mobile (101), ordonne à l'appareil d'affichage d'exécuter les étapes de la revendication 9.

11. Support lisible par ordinateur sur lequel est enregistré un élément de programme selon la revendication 10.
